# EUROPEAN PATENT APPLICATION

(11) **EP 2 096 589 A1**
(43) Date of publication of application: **02.09.2009**
(21) Application number: 08300113.1
(22) Date of filing: 26.02.2008
(51) Int. Cl.: G06Q 10/00, G06Q 20/00, G06Q 40/00

(54) **Guaranteed revenue at electronic ticket issuance and modification**

(71) Applicant: AMADEUS sas, 06410 Biot (FR)
(72) Inventor: Raufaste, Nathalie, 06600 Antibes (FR); Balluais, Nicolas, 06560 Valbonne (FR)
(74) Representative: Decobert, Jean-Pascal

(57) **Abstract**

The invention relates to a method for automatically checking revenue in connection with transportation ticket purchases such as airline tickets. A request for issuance or follow-up processing of the ticket is received at an E-ticket server, said request comprising the fare data of the journey. A real time check is then performed so that a fare check status of at least some of the data of the fare data of the ticket is returned.

## Description

### FIELD OF THE INVENTION

The present invention relates to the field of travel request processing and more specifically describes a system and methods for checking the revenues of transportation companies at the stage of issuance of the electronic tickets. Airlines - validating airlines in particular - are non limitatively included in such transportation companies.

### BACKGROUND OF THE INVENTION

The invention extends to all kinds of transportation modes and turns out to be particularly attractive for air transport. Therefore, the invention will be mainly described in connection with airline industry. In this application, the invention is useful for the validating airline of interline journeys. This is explained in more details below.

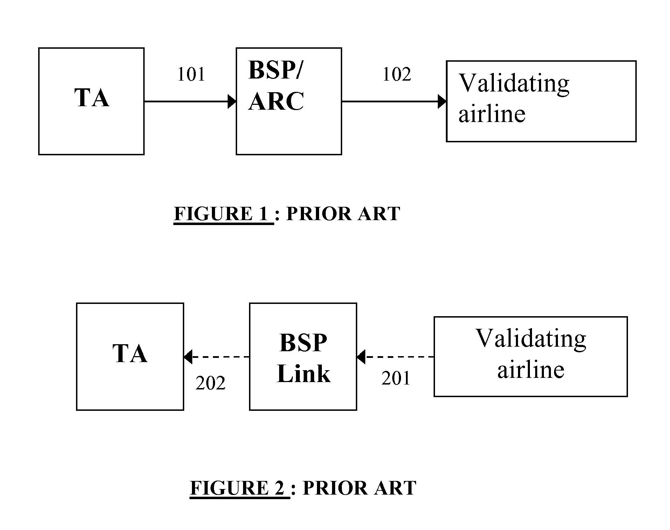

The issuance of tickets, which includes travel tickets and more generally electronic documents (that are used to account for any service sale, such as electronic Miscellaneous Charge Orders (eMCO), or excess baggage or others), typically implies various parties exchanging various data flows. Figures 1 to 5 depict the main aspects of this classical process.

Figure 1 illustrates the financial data flow when a travel reservation is made by a Travel Agency (TA) connected to a global Distribution System (GDS). The example given concerns an interline journey comprising two segments in which two airlines are participating. Data 101 are first communicated by the Travel Agency (TA) via the GDS to an organization commonly named Billing and Settlement Plan (BSP) or Airline Reporting Corporation (ARC) which centralizes the financial data for airline reservation made within a region of the world, usually a country. The BSP aggregates the data and periodically transmits to the airline a file 102 grouping the financial data of the tickets for which the airline is "validating". The validating airline collects the money for the whole trip. The remaining carriers named participating do not receive any official data at this stage.

In case of disagreement on the ticket price by the validating airline, figure 2 illustrates how an agency debit memo (ADM) is emitted 201 by the validating airline and received by the Travel Agency 202 via the BSP link which is a graphical user interface enabling airlines and Travel Agencies (TA) to log specific transactions. The agency debit memo is a bill issued by the airline to the Travel Agency (TA).

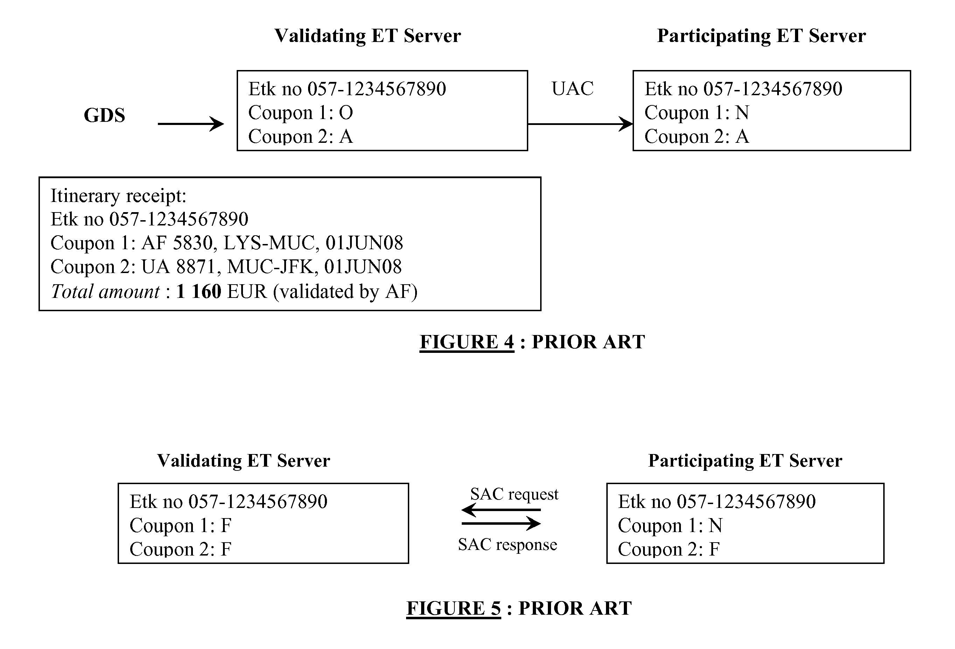

Electronic ticket issuance process also comprises various exchanges of data between the validating airline's electronic ticket server and the participating airlines' electronic ticket servers to update the electronic ticket image and the status of the associated coupons. An example is illustrated in figures 4 and 5 with messages UAC and SAC request and response exchanged between the electronic ticket servers of the two airlines.

The steps described in accordance with figures 1 and 2 are presented in the global data flow of figure 3 showing all the processing steps from the booking by a traveler to the financial settlement between the transportation companies. Figure 3 particularly illustrates the delay between the ticket issuance and the consolidation of the airline's revenue. Indeed, in the current scheme, the first four lines of data flows (booking, pricing, payment and ticketing) which concern the ticket issuance are fully isolated from the revenue accounting. The Card Authorization check made at the payment stage only involves the payment card center such as Visa (trademark) or Mastercard (trademark) and performs very preliminary payment checks as explained in detail hereafter.

The classical methods to check and enforce the revenue related to a ticket issuance thus mainly aim at processing data after ticket issuance. Settlement systems process the form of payment (e.g. check that the passenger's credit card is supported by the airline's acquirers and settle the fare amount) several days (up to weeks) after ticket issuance. Additionally fare audit, aimed at checking that the right fare was used by the travel agent and was not overridden to an extent that is not acceptable to the airline, is performed by the Revenue Accounting system usually several days (but up to weeks) after the ticket issuance. This time lag generates delays in flows and revenue leakage.

For the card settlement, many airlines still manage card sales with numerous settlement relationships and complex processes. An airline selling in many countries (and thus in many currencies) has to arrange agreements with several acquirers which are usually only able to process and settle credit card sales from a limited number of countries and/or a limited number of currencies. In some specific countries, the acquiring entity must even be local by regulation. Hence the credit card authorization currently made at payment stage only ensures that the traveler has sufficient credit on his/her account, but this authorization is not sufficient to ensure that the validating airline will manage to settle the credit card sale.

Today's fare audit and payment processes are performed in such a way that faulty or fraudulent tickets create a heavy burden "down the line" because the money is not collectible (especially when payment by credit card is not recoverable) or because manual actions need to be taken in the airline's revenue accounting system 16 to correct the Fare Calculation line data or to emit an ADM (Agency Debit Memo) to the travel agent that has issued a wrong fare. Heavy workload and huge manpower is today dedicated in the revenue accounting system to the manual treatment of these issues. In all cases either money is lost or it is unlikely to be recovered.

There is accordingly a need for improvement of the process of transportation tickets in the perspective of better guaranteeing the revenue of the transportation companies.

### SUMMARY OF THE INVENTION

The invention relates to a system and methods capable of guaranteeing the revenues of transportation companies - such as airline companies when they are acting as "validating" for interline journeys - at an early stage and particularly during the issuance of the electronic tickets.

The invention provides with checks performed automatically and in real time when a request for issuance or follow-up processing of a ticket or more generally electronic documents (such as eMCO electronic Miscellaneous Charge Order, or more generally eMD electronic Miscellaneous Document) is received at an electronic ticket server (hereafter E-ticket server). These checks include cumulatively or alternatively a fare data check and a card acquirer data verification. The fare data check comprises a fare amount check and/or a Fare Calculation line amount. Follow-up processing includes refund, modification and exchange including re-issue of the electronic ticket.

In one particular aspect of the invention, the check actions are determined and triggered by coordinating means.

These actions result in the issuance or the rejection of the ticket by the server which may be the electronic ticket server of the validating airline in the application to the airline transportation mode.

The invention takes benefit from the growing importance of the electronic ticket servers in the airline industry.

Another advantage of the invention is that it creates a synergy between an E-ticket server and other parts of the system such as the payment server (to check the form of payment and early ensure that the settlement can be done, a fare audit system (to check the fare amount and the fare conditions) and a revenue accounting system (to parse the Fare Calculation line and check that it is well-formed for pro-rating treatment of interline journeys or multi-segment journeys). This synergy is advantageously increased by online links which provide check information with a so short response time that actions can be taken by the E-ticket server prior to ticket issuance. Faulty forms of payment, fraud in the fare amount or ill-formed Fare Calculation line can, for example, be prevented by denying the ticket issuance.

According to another aspect of the invention, the checks are triggered according to rules whose criteria can include the point of sale, the identity of the Travel Agency, the distribution channel (worldwide web, or a specific GDS, for example), the type of ticket, the fare amount or others, so as to enable a flexible and customizable audit of the ticket to be issued.

According to an advantageous embodiment, the invention provides with a customizable reaction of the E-ticket server when the check leads to a faulty status. Rules enable to define what decision has to be taken such as: rejection of the ticket issuance, issuance of the ticket but flagged as faulty (which possibly comprises a "fraud suspicion" flag). The latter information may be pushed to the Departure Control System (DCS) for actions to be taken later on, when the traveler arrives at check-in.

More precisely, the invention relates to a method for automatically checking revenue in connection with transportation ticket purchases comprising the following steps performed in real time:
- receiving a request for issuance or follow-up processing of a ticket at an E-ticket server, said request comprising the fare data of the journey,
- sending a fare check request to a fare checking means,
- returning to the E-ticket server a message from the fare checking means, said message depending on a fare check status of at least some of the fare data of the ticket to be issued.

Optionally the invention may also include any of the steps indicated below:
- rejecting the issuance or the follow-up processing of the ticket or flagging it as faulty if the fare check status is faulty,
- the fare checked data comprise the fare rules applied to the ticket,
- at the fare checking means, production of a re-determination of the fare rules and comparison of the re-determined fare rules and the fare rules of the ticket,
- the re-determination step involves sending a request to a Fare Quote Engine,
- setting the fare check status to faulty if the re-determined rules differ from the fare rules of the ticket,
- the checked fare data comprise the fare amount applied to the ticket,
- at the fare checking means, producing a re-calculation of the fare amount of the ticket and comparing the re-calculated amount with the fare data of the ticket,
- setting the fare check status to faulty if the re-calculated amount differs from the fare amount of the ticket,
- setting the fare check status to faulty if the difference between the re-calculated amount and the fare amount of the ticket exceeds a predetermined tolerance margin,
- the re-calculation step involves sending a pricing request to a Fare Quote Engine,
- the checked fare data comprises the amount of the taxes and the commission applied to the ticket,
- comprising the step of, at the fare checking means, producing a re-calculation of the amount of the taxes and the commission of the ticket and comparing the re-calculated amount with the fare data of the ticket,
- setting the fare check status to faulty if the re-calculated amount differs from the fare amount of the ticket,
- the fare data of the journey comprise a Fare Calculation line of the ticket and the integrity of the Fare Calculation line is checked,
- parsing the Fare Calculation line of the ticket and, if it is faulty, sending a re-construction request to a Fare Quote Engine,
- setting the fare check status to faulty if the Fare Quote Engine failed in re-constructing the Fare Calculation line or returning the newly constructed Fare Calculation line to the E-ticket server,
- the request received at the E-ticket server comprises payment card data and the following steps are performed:
   - online accessing a database of card transaction agreements with acquirers,
   - checking whether the database includes an agreement corresponding to the payment card data of the request,
   - returning to the E-ticket server a message comprising a payment check status set to faulty if the database does not include agreement data corresponding to the payment card data of the request,
- the database contains, for each agreement, the following data:
   acquiring bank name, card company, country of payment, currency of payment,
- at the E-ticket server, rejecting the issuance or the follow-up processing of the ticket or flagging it as faulty if the payment check status is faulty.

This invention also relates to a method for automatically checking revenue in connection with transportation ticket purchases comprising the following steps performed in real time:
- receiving a request for issuance or follow-up processing of a ticket at an E-ticket server, said request comprising the fare data of the journey and payment card data,
- transmitting a check request to a check coordinator module,
- applying predetermined processing rules for selectively triggering at least one of the following checking processes:
   1. sending a fare check request including the fare rules applied to the ticket to a fare checking means, and, at the fare checking means, re-determining the fare rules of the ticket and comparing the re-determined fare rules with the fare rules of the ticket and returning to the E-ticket server a message from the fare checking means, said message depending on a fare check status set to faulty if the re-determined fare rules differ from the fare rules of the ticket,
   2. sending a fare check request including the Fare Calculation line of the ticket to a fare checking means, parsing the Fare Calculation line of the ticket, and, if it is faulty, setting the fare check status to faulty,
   3. online accessing a database of card transaction agreements with acquirers, and checking whether the database includes an agreement corresponding to the payment card data of the request, and returning to the E-ticket server a message depending on a payment check status set to faulty if the database does not include agreement data corresponding to the payment card data of the request.
   According to optional aspects of this method, the invention further comprises the step of:
- the E-ticket server rejecting the issuance or the follow-up processing of the ticket or flagging it as faulty if the fare check status or the payment check status is faulty.

A third aspect of the invention concerns a method for automatically checking revenue in connection with transportation ticket purchases comprising the following steps performed in real time:
- receiving a request for issuance or follow-up processing of a ticket at an E-ticket server, said request comprising the fare data of the journey and payment card data,
- transmitting a check request to a check coordinator module,
- applying predetermined processing rules for selectively triggering at least one of the following checking processes:
   - sending a fare check request including the fare amount applied to the ticket to a fare checking means, and, at the fare checking means, re-calculating the fare amount of the ticket and comparing the re-calculated amount with the fare data of the ticket and returning to the E-ticket server a message from the fare checking means, said message depending on a fare check status set to faulty if the re-calculated amount differs from the fare amount of the ticket or is outside a predetermined tolerance margin,
   - sending a fare check request including the Fare Calculation line of the ticket to a fare checking means, and parsing the Fare Calculation line of the ticket, and, if it is faulty, sending a re-construction request to a Fare Quote Engine, and setting the fare check status to faulty if the Fare Quote Engine failed in re-constructing the Fare Calculation line or returning the newly constructed Fare Calculation line to the E-ticket server,
   - online accessing a database of card transaction agreements with acquirers, and checking whether the database includes an agreement corresponding to the payment card data of the request, and returning to the E-ticket server a message depending on a payment check status set to faulty if the database does not include agreement data corresponding to the payment card data of the request.

This method may comprise the step of the E-ticket server rejecting the issuance or the follow-up processing of the ticket, or flagging it as faulty if the fare check status or the payment check status is faulty,

This invention further relates to a system for automatically checking revenue in connection with transportation ticket purchases comprising:
- an E-ticket server capable of receiving a request for issuance or follow-up processing of a ticket, said request comprising the fare data of the journey,
- fare checking means for processing a fare check request in connection with the request for issuance or follow-up processing of a ticket and capable of providing the E-ticket server with a message depending on a fare check status of a least some of the fare data of the ticket.

In a preferred embodiment, the fare checking means comprise a fare checking module presenting:
- means for constructing a request for determination of fare rules,
- communication means capable of transmitting said request to a Fare Quote Engine and for receiving in reply re-determined fare rules for the ticket,
- a comparator capable of comparing the fare rules of the ticket with the re-determined fare rules and to set the fare check status to faulty if the re-determined rules differ from the fare rules of the ticket.

In another embodiment, the fare checking means comprise a fare checking module presenting:
- means for constructing a pricing request,
- communication means capable of transmitting said pricing request to a Fare Quote Engine and of receiving in reply a re-calculated fare amount for the ticket,
- a comparator capable of comparing the fare data of the ticket with the re-calculated fare amount and to set the fare check status to faulty if the re-calculated amount differs from the fare amount of the ticket or is outside a predetermined tolerance margin.

The fare checking means may comprise a database of checking rules accessible by the fare checking module to customize the fare checking process.

Further preferred embodiments of this system are non limitatively introduced hereafter:
- the checking rules comprise rules for determining the tolerance margin,
- the checking rules comprise rules for filtering the fare check request according to the original calculation mode of the fare amount of the ticket,
- the fare data of the journey comprise the Fare Calculation line of the ticket, the fare checking means further comprising a Fare Calculation line parser for checking the integrity of the Fare Calculation line,
- the Fare Calculation line parser comprises:
   - means for building a re-construction request,
   - communication means capable of transmitting said re-construction request to a Fare Quote Engine and of receiving in reply a newly constructed Fare Calculation line or a failure message,
- the system comprises a database of card transaction agreements with acquirers accessible by an acquirer checking module,
- the system comprises a check coordinator module interfacing the E-ticket server respectively with the fare checking means and the acquirer checking module,
- the system comprises a database of processing rules accessible by the check coordinator module,
- the processing rules comprise rules for selectively triggering at least one checking process among the fare checking process and the acquirer checking process,
- the processing rules comprise rules for determining an instruction to be transmitted to the E-ticket server according to the result of the checking process, said instruction being chosen among: accept ticket issuance or follow-up processing, reject ticket issuance or follow-up processing or accept ticket issuance or follow-up processing but flag it as faulty.

### BRIEF DESCRIPTION OF THE DRAWINGS

Figure 1 illustrates a flow of financial data related to a ticket according to the prior art.
Figure 2 depicts how an Agency Debit Memo is issued by the validating airline if it disagrees on the ticket fare.

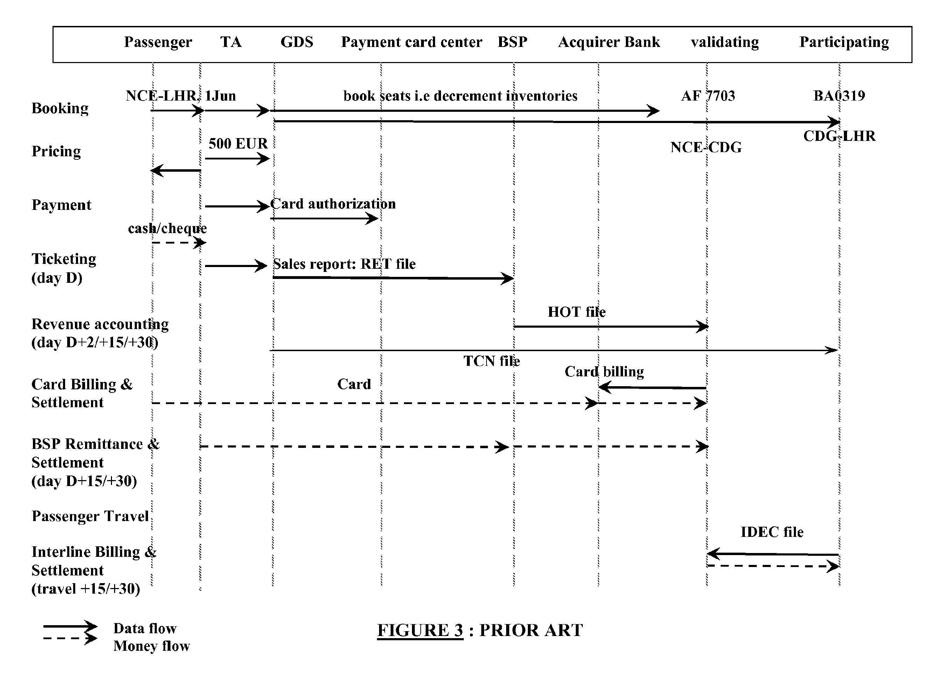

Figure 3 is a schematic diagram of the processing steps deriving from a ticket booking in a system according to the prior art.
Figures 4 and 5 illustrate the exchange of data between a validating airline and a participating airline in case of E-ticket issuance, according to the today's practice.

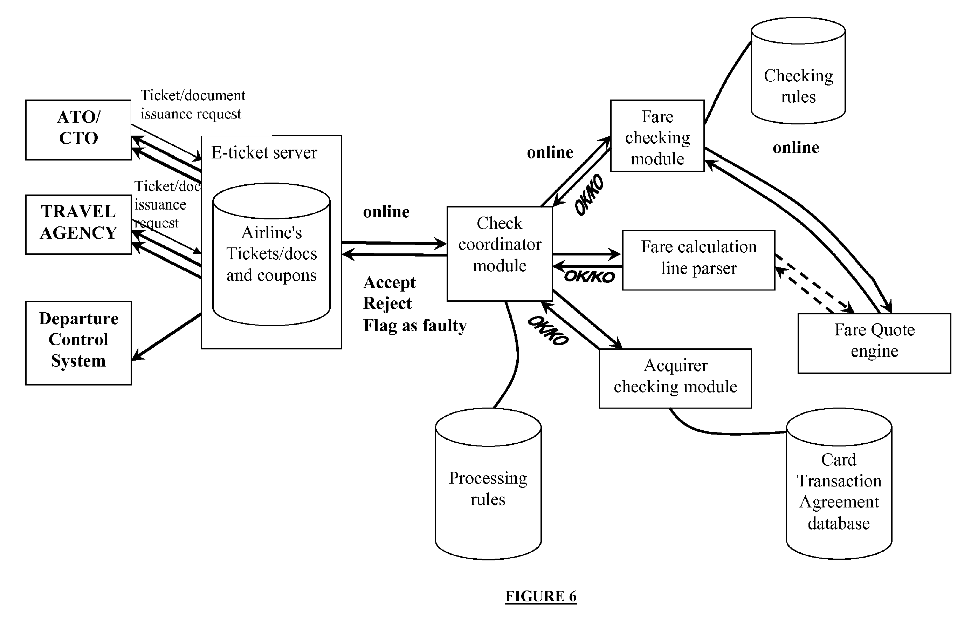

Figure 6 is a schematic diagram of a system implementing the present invention.

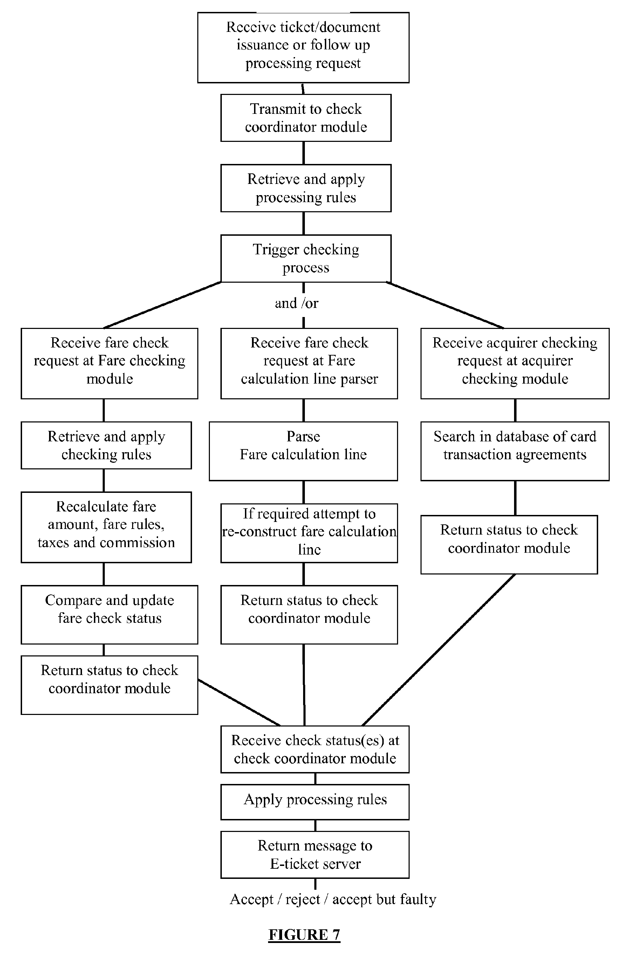

Figure 7 is a flowchart of the method's steps according to an embodiment of the invention.

### DETAILED DESCRIPTION

### The following detailed description of the invention refers to the accompanying drawings.

While the description includes some embodiments, others are possible without departing from the spirit and the scope of the invention. In particular, the examples given below relate to air transportation industry but the invention extends to all kinds of transportation modes such as ground (such as railway) and sea transport. Besides, the invention extends, whatever the travel involves, to a single transportation mode or a plurality of transportation modes.

Turning now to figure 6, the components of the system are depicted in connection with other components of a ticket reservation system. An electronic ticket server also called E-ticket server is accessed by remote users via communication links. The remote users can be airline's Airport Travel Offices ATO or City Travel Offices CTO. These offices constitute points of access for the clients either physically or via a website such as the airline's website.

Remote users are also Travel Agencies. Issuance of tickets is requested from these remote users and the corresponding messages are received at the E-ticket server of the validating airline.

The airline's E-ticket server can be hosted by a third party.

The E-ticket server comprises a database of tickets and coupons and provides with the usual functionalities of a conventional electronic ticket server. It can be connected to several ticketing servers for the release of the tickets and it gathers informations from all distribution channels providing therefore with a complete view of the airline's sales. The airline's electronic ticket server database stores all sales reimbursement, exchanges, cancellation data regarding E-tickets and their associated coupons.

Figure 6 further illustrates that the E-ticket server is linked via communication means with a Departure Control System. A conventional Departure Control System can be used.

In addition to its classical functions, the E-ticket server is, according to the invention, in online communication with checking means. In the example given in figure 6, a check coordinator module interfaces the E-ticket server with cumulative or alternative checking components.

The interfacing function of the check coordinator module is advantageously ruled by a policy predetermined by the airline and materialized by processing rules stored in a database accessible by the check coordinator module.

A first aspect of the checking means is a fare checking module. The fare checking module is in online communication with the check coordinator module to check the Fare definition of the processed ticket in real time. The fare definition may comprise:
- the fare amount,
- the amount of the taxes (such as airport taxes),
- the amount of the commission (such as the commission of the Travel Agency),
- the fare rules, that is the fare conditions applicable to the ticket.

The Fare checking module is connectively linked with a Fare Quote Engine which it can access in real time via online communication means to produce a new rule determination or new amount calculation especially of the fare amount of the ticket and check the fare conditions, i.e. the rules of application/validity of the fare. The communication means are bidirectional so that the recalculated fare amount is transmitted without delay to the Fare checking module. The checks of these Fare data can be made cumulatively or alternatively. Each amount (fare, taxes, commission) can be checked individually or only a check of the global ticket price can be performed.

Checking rules are applied to the Fare checking module to customize its working notably as to the criteria of comparison between the original fare amount of the ticket and the recalculated fare amount in view of the Fare rules applicable and applied to the ticket. Same applies to the conditions of validity of the fare used in the ticket, and the taxes amount and validity and the commission amount. This comparison will be explained in detail later in the description.

Another aspect of the checking means is a Fare Calculation line parser. Its communication links with the check coordinator module are similar to what has been described for the fare checking module. Ticket's data comprise a Fare Calculation line which is the basis for proration. Proration is the process that splits the revenue for the whole trip into each coupon (i.e. segment) hence determining the revenue share of each airline involved in the trip. In practice, the Fare Calculation line is a series of characters which can be interpreted according to normalized policies for providing proration values.

Here is an example of Fare Calculation line: BAK BA X/LON340.00BD MME147.69T3 ABZ71.87T3 MME71.87BE X/LON147.69BA BAK340.00NUC1119.12END ROE1.000000XT32.00AZ98.00. This is for a round trip ticket from Baku to Baku, with 6 coupons:
- coupon 1: from Baku (BAK) to London Heathrow (LON) via British Airways (BA)
- coupon 2: from London to Durham Tees (MME)via Bmi (BD)
- coupon 3: from Durham Tees (MME) to Aberdeen Dyce (ABZ) via Eastern Airways (T3)
- coupon 4: from Aberdeen Dyce (ABZ) to Durham Tees via Eastern Airways (T3)
- coupon 5: from Durham Tees (MME) to London (LON) via Bmi (BD)
- coupon 6: from London to Baku (BAK) via British Airways (BA)
where
- X/means transit
- the first 340.00 means that the part before (encompassing only the BAK-LON coupon) is worth 340.00
- the last NUC1119.12 indicates that the whole trip is worth 1119.14 Neutral Unit of Construction (this NUC can be either USD, or GBP, or EUR)
- the ROE 1.000000 indicates the Rate Of Exchange (here it's between USD and USD, so it's 1)
- the last part indicates taxes: XT32.00 and AZ98.00

There may be also surcharges (following a city, and indicated for example with "Q50.00", meaning a Q surcharge worth 50.00).

If the Fare Calculation line is ill-constructed, the parsing program cannot understand its meaning.

Depending on the result of the parsing and especially when the Fare Calculation line is inconsistent, transmission may intervene between the Fare Calculation line parser and the Fare Quote Engine. Again, online links are used to perform this action in real time. The figure 6 depicts the implementation of a single Fare Quote Engine to try to reconstruct a valid Fare Calculation line. However, the Fare Calculation line may be reprocessed by an engine distinct from the one used for the fare amount without departing from the scope of the invention. A check status may also be directly set to faulty without attempt to reconstruct the Fare Calculation line.

A third aspect of the checking means is an acquirer checking module in online communication with the check coordinator module. As previously explained, determining whether the airline has an acquirer (that is a financial organization such as a bank) for collecting money throughout the world and in various currencies is a further objective of the invention. This is rendered possible by the access to a database used for determining whether the airline has an acquirer for the ticket.

Said database is a repository of agreement definition data between a specific airline and acquirers, for card transactions. For a given airline, the database comprises, for each acquiring agreement, the following non exhaustive list of data:
- acquiring bank name,
- card company,
- country where the payment is made,
- currency in which the payment is made.

The database may of course contain other data like a card type such as "Maestro" or "Premier" (Trademarks) or an identification of ticket distribution channels.

These data are preferably updated directly by the airline, for example by means of a graphical user interface that enables the airline to display its list of card transaction agreements and update it.

The physical implementation of the components described above may vary depending on the application. For example, the Check Coordinator module may be in the vicinity of the E-ticket server (that is the same location) as well as the fare checking module, the Fare Calculation line parser and the acquirer checking module alternatively. These last four elements may be grouped at a remote location. The Fare checking module and/or the Fare Calculation line parser may also be hosted by the Fare Quote Engine.

The working of the invention is described in detail hereafter in accordance with the preferred embodiment illustrated in figure 6 where the data flows are depicted as well as in figure 7 showing successive steps of the invention.

Whenever a ticket issuance is requested, the E-ticket server acts in a conventional manner but also forwards a request to the check coordinator module. This module acts as an integrator and determines whether the ticket issuance has to be accepted, rejected of flagged as faulty (the latter flag being used in particular for future processing by the Departure Control System). This determination involves checking steps.

The check coordinator accesses the processing rules database to apply the policy of check previously defined by the airline. The rules indicate which checking actions have to be taken and notably if requests have to be sent to the Fare checking module and/or the Fare Calculation line parser and/or the acquirer checking module. Parameters used to build the rules may comprise:
the travel agency that initiates the sale, the country of issuance, the Fare Calculation mode indicator (indicating whether the fare amount and conditions were determined automatically by the GDS, or were overridden manually by the Travel Agent), the fare amount of the ticket, the channel (web, GDS, etc), ...

The coordinator module may request two or three modules simultaneously with parallel queries or defines the order of these queries. For illustrative purposes, it is hereafter assumed that the parallel requests are triggered by the check coordinator module.

A fare check request is accordingly received at the fare checking module. Depending on checking rules retrieved by the Fare checking module, the Fare Quote Engine is requested to reprice the ticket. The rules used in this perspective may include: whether the ticket was automatically priced or not, whether the travel agent has modified the price, the global amount of the fare and the conditions of validity of the fare. As all the transmissions are made online, the response time is very low and the Fare Quote Engine replies with a recalculated fare amount, fare basis and conditions, as well as taxes and commission amounts.

The Fare checking module then makes a comparison between the fare amount of the ticket and the recalculated one. Other rules are advantageously used at this stage to define a tolerance margin for interpreting the comparison. The tolerance margin can be null. The same kind of comparison can be done for other Fare data and in particular for the fare rules, the taxes and the commission.

If the gap between the two compared figures is too big, the module can either return "KO" which indicates that the Fare amount is faulty, or can prepare an Agency Debit Memo (ADM) to be issued to the travel agency. The airline can tune if this memo should be sent automatically to the travel agent or if it should be posted in an internal queue to be examined by an airline's agent before transmission to the travel agency (the airline's agent may also decide to waive it away). The check coordinator module acts as an interface for these actions.

Another check is simultaneously made by the Fare Calculation line parser, under reception of a request from the check coordinator module. The parser checks whether the Fare Calculation line can be read normally and that there is no discrepancy with the other information on the ticket such as the segments of the trip, the origin and destination airports. In case the parser detects an invalid Fare Calculation line, a reconstruction request may be sent to the Fare Quote Engine. If the Fare Quote Engine succeeds in the reconstruction, the appropriate reply is sent to the parser which then reports the error detection "KO" and the reconstructed Fare Calculation line to the check coordinator module. If the Fare Quote Engine fails in the reconstruction, a fault message "KO" is only returned. If the parsing is successful, the Fare Calculation online parser returns an "OK" message.

The third check of this example consists in verifying whether the airline has an acquirer for the customer's settlement. A corresponding request is sent to the acquirer checking module along with ticket's information. The acquirer checking module accesses a database which integrates the airline's chosen acquiring banks and/or payment service providers; the card acceptance model is customizable by the airline amongst a portfolio of acceptance methods, certified by banks and card schemes. The authorization links to be used are based on merchant/acquirer business rules (like country, currency, credit card company, etc). This check can be used as a pre-requisite to the successful completion of a sale.

On the basis of predefined criteria (such as validating airline , point-of-sale country, currency, credit card type...) the acquirer checking module assesses whether the validating airline has defined an acquirer for this credit (or debit) card settlement. The appropriate response ("KO" or "OK") is returned to the check coordinator module.

The check coordinator module collects the responses derived from the checking actions and determines the final reply to be delivered to the E-ticket server. Processing rules are used to instruct the E-ticket server to reject the ticket issuance or to accept it or to accept it but flag it as faulty. In case some of the processes are down or too long, default responses can also be defined by the rules.

It should be noted that the behavior of the check coordinator module is highly customizable by the rule definition so that the whole checking processing can accurately and reactively be defined by an administrator acting for the transportation company.

In particular, the check process can be customized in the following ways:
- the order of the checks (acquirer, fare amount, Fare Calculation line) can be tuned. Depending on several criteria, some checks may also be bypassed. In some situations (e.g. sales through the web channel) some checks may be bypassed or be less scrutiny as no manual action is possible for the customer (i.e. the traveler cannot modify the fare amount, nor the fare conditions, nor the Fare Calculation line),
- the response type can be chosen between (1) accept E-ticket issuance, (2) reject E-ticket issuance, or (3) accept E-ticket issuance but flag the E-ticket as "fraud suspected". In the latter case, this information is pushed to the Departure Control System; check-in agents are warned that a problem occurred during the settlement of the transaction (e.g. transaction not honoured by the issuer, prior departure),
- the airline can customize which kinds of errors in each check-module (acquirer, fare audit, Fare Calculation parser), will end up in each response flavor.

All business rules tuning the global behavior, but also the behavior of each module and the atomic checks, depend on many criteria: a non-exhaustive list includes validating airline, participating airline(s), sale channel, type of flights (domestic/international), point of sale, travel agency, origin, destination, ticket type, fare amount, form of payment, and many others.

## Claims

1. Method for automatically checking revenue in connection with transportation ticket purchases comprising the following steps performed in real time:
- receiving a request for issuance or follow-up processing of a ticket at an E-ticket server, said request comprising the fare data of the journey,
- sending a fare check request to a fare checking means,
- returning to the E-ticket server a message from the fare checking means, said message depending on a fare check status of at least some of the fare data of the ticket to be issued.

2. Method according to claim 1 further comprising the step of the E-ticket server rejecting the issuance or the follow-up processing of the ticket or flagging it as faulty if the fare check status is faulty.

3. Method according to claim 1 or 2 wherein the checked fare data comprise the fare rules applied to the ticket.

4. Method according to claim 3 comprising the step of, at the fare checking means, producing a re-determination of the fare rules and comparing the re-determined fare rules and the fare rules of the ticket.

5. Method according to claim 4 wherein the re-determination step involves sending a request to a Fare Quote Engine.

6. Method according to claim 4 or 5 comprising setting the fare check status to faulty if the re-determined rules differ from the fare rules of the ticket.

7. Method according to claim 1 or 2 wherein the checked fare data comprise the fare amount applied to the ticket.

8. Method according to claim 7 comprising the step of, at the fare checking means, producing a re-calculation of the fare amount of the ticket and comparing the re-calculated amount with the fare data of the ticket.

9. Method according to claim 8 comprising setting the fare check status to faulty if the re-calculated amount differs from the fare amount of the ticket.

10. Method according to claim 8 comprising setting the fare check status to faulty if the difference between the re-calculated amount and the fare amount of the ticket exceeds a predetermined tolerance margin.

11. Method according to any one of claims 8 to 10 wherein the re-calculation step involves sending a pricing request to a Fare Quote Engine.

12. Method according to claim 1 or 2 wherein the checked fare data comprise the amount of the taxes and the commission applied to the ticket.

13. Method according to claim 12 comprising the step of, at the fare checking means, producing a re-calculation of the amount of the taxes and the commission of the ticket and comparing the re-calculated amount with the fare data of the ticket.

14. Method according to claim 12 or 13 comprising setting the fare check status to faulty if the re-calculated amount differs from the fare amount of the ticket.

15. Method according to claim 1 or 2 wherein the fare data of the journey comprise a Fare Calculation line of the ticket and the integrity of the Fare Calculation line is checked.

16. Method of claim 15 comprising the steps of:
- parsing the Fare Calculation line of the ticket and, if it is faulty, sending a re-construction request to a Fare Quote Engine,
- setting the fare check status to faulty if the Fare Quote Engine failed in re-constructing the Fare Calculation line or returning the newly constructed Fare Calculation line to the E-ticket server.

17. Method of claim 1 wherein the request received at the E-ticket server comprises payment card data and wherein the following steps are performed:
- online accessing a database of card transaction agreements with acquirers,
- checking whether the database includes an agreement corresponding to the payment card data of the request,
- returning to the E-ticket server a message comprising a payment check status set to faulty if the database does not include agreement data corresponding to the payment card data of the request.

18. Method according to claim 17 wherein the database contains, for each agreement, the following data: acquiring bank name, card company, country of payment, currency of payment.

19. Method according to claim 17 further comprising the step of the E-ticket server rejecting the issuance or the follow-up processing of the ticket or flagging it as faulty if the payment check status is faulty.

20. Method for automatically checking revenue in connection with transportation ticket purchases comprising the following steps performed in real time:
- receiving a request for issuance or follow-up processing of a ticket at an E-ticket server, said request comprising the fare data of the journey and payment card data,
- transmitting a check request to a check coordinator module,
- applying predetermined processing rules for selectively triggering at least one of the following checking processes:
1. sending a fare check request including the fare rules applied to the ticket to a fare checking means, and, at the fare checking means, re-determining the fare rules of the ticket and comparing the re-determined fare rules with the fare rules of the ticket and returning to the E-ticket server a message from the fare checking means, said message depending on a fare check status set to faulty if the re-determined fare rules differ from the fare rules of the ticket,
2. sending a fare check request including the Fare Calculation line of the ticket to a fare checking means, parsing the Fare Calculation line of the ticket, and, if it is faulty, setting the fare check status to faulty,
3. online accessing a database of card transaction agreements with acquirers, and checking whether the database includes an agreement corresponding to the payment card data of the request, and returning to the E-ticket server a message depending on a payment check status set to faulty if the database does not include agreement data corresponding to the payment card data of the request.

21. Method according to claim 20 further comprising the step of the E-ticket server rejecting the issuance or the follow-up processing of the ticket or flagging it as faulty if the fare check status or the payment check status is faulty.

22. Method for automatically checking revenue in connection with transportation ticket purchases comprising the following steps performed in real time:
- receiving a request for issuance or follow-up processing of a ticket at an E-ticket server, said request comprising the fare data of the journey and payment card data,
- transmitting a check request to a check coordinator module,
- applying predetermined processing rules for selectively triggering at least one of the following checking processes:
• sending a fare check request including the fare amount applied to the ticket to a fare checking means, and, at the fare checking means, re-calculating the fare amount of the ticket and comparing the re-calculated amount with the fare data of the ticket and returning to the E-ticket server a message from the fare checking means, said message depending on a fare check status set to faulty if the re-calculated amount differs from the fare amount of the ticket or is outside a predetermined tolerance margin,
• sending a fare check request including the Fare Calculation line of the ticket to a fare checking means, and parsing the Fare Calculation line of the ticket, and, if it is faulty, sending a re-construction request to a Fare Quote Engine, and setting the fare check status to faulty if the Fare Quote Engine failed in re-constructing the Fare Calculation line or returning the newly constructed Fare Calculation line to the E-ticket server,
• online accessing a database of card transaction, and checking whether the database includes an agreement corresponding to the payment card data of the request, and returning to the E-ticket server a message depending on a payment check status set to faulty if the database does not include agreement data corresponding to the payment card data of the request.

23. Method according to claim 22 further comprising the step of the E-ticket server rejecting the issuance or the follow-up processing of the ticket or flagging it as faulty if the fare check status or the payment check status is faulty.

24. System for automatically checking revenue in connection with transportation ticket purchases comprising:
- an E-ticket server capable of receiving a request for issuance or follow-up processing of a ticket, said request comprising the fare data of the journey,
- fare checking means for processing a fare check request in connection with the request for issuance or follow-up processing of a ticket and capable of providing the E-ticket server with a message depending on a fare check status of a least some of the fare data of the ticket.

25. System of claim 24 wherein the fare checking means comprise a fare checking module presenting:
- means for constructing a request for determination of fare rules,
- communication means capable of transmitting said request to a Fare Quote Engine and of receiving in reply re-determined fare rules for the ticket,
- a comparator capable of comparing the fare rules of the ticket with the re-determined fare rules and to set the fare check status to faulty if the re-determined rules differ from the fare rules of the ticket.

26. System of claim 24 wherein the fare checking means comprise a fare checking module presenting:
- means for constructing a pricing request,
- communication means capable of transmitting said pricing request to a Fare Quote Engine and for receiving in reply a re-calculated fare amount for the ticket,
- a comparator capable of comparing the fare data of the ticket with the re-calculated fare amount and to set the fare check status to faulty if the re-calculated amount differs from the fare amount of the ticket or is outside a predetermined tolerance margin.

27. System of claim 26 wherein the fare checking means comprise a database of checking rules accessible by the fare checking module to customize the fare checking process.

28. System of claim 27 wherein the checking rules comprise rules for determining the tolerance margin.

29. System of claim 26 wherein the checking rules comprise rules for filtering the fare check request according to the original calculation mode of the fare amount of the ticket.

30. System of claim 24 wherein the fare data of the journey comprise the Fare Calculation line of the ticket, the fare checking means further comprising a Fare Calculation line parser for checking the integrity of the Fare Calculation line.

31. System of claim 30 wherein the Fare Calculation line parser comprises:
- means for building a re-construction request,
- communication means capable of transmitting said re-construction request to a Fare Quote Engine and of receiving in reply a newly constructed Fare Calculation line or a failure message.

32. System of claim 24 comprising a database of card transaction agreements with acquirers accessible by an acquirer checking module.

33. System of claim 32 comprising a check coordinator module interfacing the E-ticket server respectively with the fare checking means and the acquirer checking module.

34. System of claim 33 comprising a database of processing rules accessible by the check coordinator module.

35. System of claim 34 wherein the processing rules comprise rules for selectively triggering at least one checking process among the fare checking process and the acquirer checking process.

36. System of claim 34 wherein the processing rules comprise rules for determining an instruction to be transmitted to the E-ticket server according to the result of the checking process, said instruction being chosen among: accept ticket issuance or follow-up processing, reject ticket issuance or follow-up processing or accept ticket issuance or follow-up processing but flag it as faulty.
